# EUROPÄISCHE PATENTANMELDUNG

(11) **EP 2 647 777 A2**
(43) Veröffentlichungstag der Anmeldung: **09.10.2013**
(21) Anmeldenummer: 13001574.6
(22) Anmeldetag: 27.03.2013
(51) Int. Cl.: E04C 2/54

(54) **Paneele oder Hohlkammerscheibe mit Einlegeelementen**

(30) Priorität: 02.04.2012 DE 202012003320 U
(71) Anmelder: Rodeca GmbH, 45473 Mülheim (DE)
(72) Erfinder: Conterno, Alessandro, Dr., 45468 Mülheim (DE)
(74) Vertreter: Demski, Siegfried

(57) **Zusammenfassung**

Die Erfindung betrifft eine Paneele 102, 103 oder Hohlkammerscheibe für Wand- und/oder Dachflächen, umfassend zumindest zwei äußere Schalen 102, 103 und mehrere Querstege 106, welche die Schalen 102, 103 miteinander verbinden, sodass eine Vielzahl von einzelnen Kammern 107, 108, 109 zwischen den äußeren Schalen 102, 103 vorliegen. Zur Verschönerung von Wand- oder Dachflächen älterer Gebäude können Paneelen 102, 103 eingesetzt werden, welche mit der Wand oder dem Dach fest verbunden werden. Zur besonderen Gestaltung des Gebäudes, gegebenenfalls auch zur Nutzung als Werbefläche, besteht hierbei die Möglichkeit, in die Kammern 107, 108, 109 der Paneelen 102, 103 Einlegeelementen einzuschieben, welche in der einfachsten Form eine Farbe aufweisen oder eine strukturierte Oberfläche. Alternativ besteht die Möglichkeit, jedes Einlegeelement mit einem streifenförmigen Bildbestandteil zu bedrucken oder mit einer bedruckten Folie zu bekleben, um somit zu einer großformatigen Bilddarstellung zu gelangen.

## Beschreibung

Die Erfindung betrifft eine Paneele oder Hohlkammerscheibe für Wand- und/oder Dachflächen, umfassend zumindest zwei äußere Schalen und mehrere Quer-stege, welche die Schalen miteinander verbinden, sodass eine Vielzahl von einzelnen Kammern zwischen den äußeren Schalen vorliegen.

Paneelen und Hohlkammerscheiben werden für Wand- oder Dachflächen eingesetzt, wobei bevorzugt transparente Ausführungen verwendet werden. Durch die Verwendung einer transparenten Ausführung besteht beispielsweise die Möglichkeit; die Paneelen als Dachfläche innerhalb eines bestehenden Daches entweder nachträglich zu integrieren oder einen Teil der Dachfläche mithilfe von Paneelen oder Hohlkammerscheiben einzudecken, um eine ausreichende Beleuchtung der unterhalb der Dachfläche liegenden Räumlichkeiten zu ermöglichen. Hierbei kann es sich beispielsweise um ein Bürogebäude, ein Fabrikgebäude oder eine Montagehalle handeln, wodurch ein Teil der erforderlichen Beleuchtung durch das Tageslicht gewährleistet wird. Ebenso kann die Verwendung bei Wohngebäuden erfolgen, soweit ein Dachausbau vorgesehen ist.

Die gattungsgemäßen Paneelen oder Hohlkammerscheiben bestehen in der Regel aus Polycarbonat, welches gut verarbeitet werden kann und widerstandsfähig ist. Die Fertigung der Paneelen bzw. Hohlkammerscheiben erfolgt in der Form, dass Granulat aus Polycarbonat aufgeschmolzen und durch eine Extruderdüse gepresst wird. Die Extruderdüse bestimmt hierbei die Form- und Strukturgebung der Paneelen bzw. Hohlkammerscheiben. Zu diesem Zweck werden die Extruderdüsen jeweils individuell gefertigt. Im einfachsten Ausführungsbeispiel bestehen die Paneelen beziehungsweise Hohlkammerscheiben aus zumindest zwei äußeren Schalen und mehreren Querstegen, durch welche die Schalen miteinander verbunden sind. Ebenso besteht aber die Möglichkeit, je nach der vorhandenen Anforderung, insbesondere hinsichtlich einer thermischen Isolierung, eine Vielzahl von Schalen vorzusehen, sodass zwischen den einzelnen Schalen durch die Querstege voneinander getrennte Kammern entstehen.

Als besonderer Vorteil ist hierbei hervorzuheben, dass die Paneelen beziehungsweise Hohlkammerscheiben kostengünstig herstellbar sind und deutlich weniger Gewicht aufweisen, als eine herkömmliche Dacheindeckung. Durch das geringe Gewicht besteht darüber hinaus die Möglichkeit, die Paneelen zur Verkleidung von Gebäuden einzusetzen, beispielsweise in Form einer vorgehängten Schale oder durch eine unmittelbare Befestigung auf der Wandfläche. Somit können ältere Fabrikhallen oder Gebäude mit einer neuen Fassade ausgestattet werden, um das Erscheinungsbild von älteren Gebäuden zu verschönern.

Die Paneelen beziehungsweise Hohlkammerscheiben werden in einer Breite von 0,3 m bis 1,5 m hergestellt, wobei größere Flächen durch mehrere nebeneinander und in Längsrichtung hintereinander angeordnete Paneelen eingedeckt werden können. Ebenso können Wandflächen vollflächig verkleidet werden. Zur Verbindung der Paneelen untereinander weisen diese an den Längskanten Kupplungselemente auf, die durch eine Nut- oder Federverbindung miteinander korrespondierend verbunden werden können. Die Montage derartiger Paneelen erfolgt hierbei in der Art, dass die Kupplungselemente durch Zusammenschieben miteinander verbunden werden, wobei die bevorzugte Verbindungsrichtung in der Ebene der Paneele liegt. Ebenso ist es aber möglich, Kupplungsvarianten durch Verriegelungselemente zu wählen, die eine Verbindungsrichtung vertikal zu Paneelebene ermöglichen. Ähnlich verhält es sich bei den Hohlkammerscheiben, diese werden in der Regel durch einen Rahmen, beispielsweise einen Aluminiumrahmen, gehalten, wobei auch in diesem Fall mehrere nebeneinander und übereinander liegende Hohlkammerscheiben zum Einsatz kommen können, sodass auch die Hohlkammerscheiben für Wand- und Dachflächen geeignet sind.

Gattungsgemäße Paneelen beziehungsweise Hohlkammerscheiben in transparenter Form werden bevorzugt eingesetzt, um den Lichteinfall in den dahinter beziehungsweise darunter befindlichen Räumen zu ermöglichen. Bei Wandflächenverkleidungen steht dieser Einsatzzweck nicht im Vordergrund. Durch eine Wandflächenverkleidung soll vielmehr der optische Eindruck eines möglicherweise unansehnlichen Gebäudes verbessert werden, wobei der Wunsch besteht, durch farbliche Akzente oder weitere Maßnahmen ein optimales Erscheinungsbild zu schaffen.

Der vorliegenden Erfindung liegt die Aufgabe zugrunde, eine neuartige Paneele beziehungsweise Hohlkammerscheibe aufzuzeigen, welche die Möglichkeit einer Beschattung und optischen Gestaltung, beispielsweise von Wand- oder Dachflächen, ermöglicht.

Erfindungsgemäß ist zur Lösung der Aufgabe vorgesehen, dass zumindest einige Kammern mit Einlegeelementen bestückt sind, welche zumindest auf den den äußeren Schalen zugewandten Flächen eine farbliche und/oder strukturierte Gestaltung aufweisen. Weitere vorteilhafte Ausgestaltungen der Erfindung ergeben sich aus den Unteransprüchen.

Durch die Verwendung von Einlegeteilen, welche in einzelne Kammern der Paneelen oder Hohlkammerscheiben eingeschoben werden können, besteht die Möglichkeit, eine farbliche Gestaltung der Wand- oder Dachflächen vorzunehmen. Ebenso besteht die Möglichkeit, durch eine strukturierte Gestaltung der Oberflächen der Einlegeteile Einfluss auf die Optik der Wand- oder Dachfläche zu nehmen. Im Falle der Dachflächen könnten beispielsweise Einlegeteile mit einer etwas dunkleren Einfärbung verwendet werden, die als Profile in die Kammern eingeschoben werden, und zwar in der Art, dass genügend Licht durch die Paneele beziehungsweise Hohlkammerscheibe hindurchtreten kann. Hierzu kann vorzugsweise das Einschieben der Einlegeelemente in jede zweite Kammer oder gegebenenfalls dritte oder vierte Kammer erfolgen, sodass nur ein Teilbereich zur Abblendung genutzt wird, während die dazwischen liegenden Kammern genügend Licht hindurchlassen. Die Art der Farbgebung oder gegebenenfalls die Art der Strukturierung der Einlegeelemente kann dem jeweiligen Einsatzzweck und wahlweise nach Kundenwünschen angepasst werden. Soweit eine Wandfläche verkleidet wird, bestehen darüber hinaus eine Vielzahl von Kombinationsmöglichkeiten, beispielsweise durch Verwendung mehrerer verschiedener Farben, die miteinander kombiniert werden, und zwar in der Form, dass farbige Einlegeelemente in der Art in die Kammern eingeschoben werden, dass bestimmte Muster entstehen, die zum Teil kleinflächig ausgelegt sein können, aber ebenso großflächig und sich beispielsweise über die gesamte Wandfläche erstrecken. Gleiches gilt für die Verwendung von strukturierten Einlegeelementen, wobei Einlegeelemente mit strukturierter Außenfläche mit entsprechenden farblich gestalteten Einlegeelementen kombiniert werden können, um ein Muster in die Wandfläche zu integrieren. Soweit es sich um eine strukturierte Gestaltung der Einlegeelemente handelt, können durch die Strukturierung besondere Lichteffekte bei Sonneneinstrahlung durch unterschiedliche Brechung und Reflexion hervorgerufen werden. Ein weiterer besonderer Vorteil besteht dadurch, dass auch ein nachträglicher Austausch der Einlegeelemente erfolgen kann und somit die Wandfläche in größeren Zeitabständen individuell umgestaltet werden kann.

In Ausgestaltung der Erfindung ist vorgesehen, dass zumindest eine, vorzugsweise mehrere innere Schalen vorgesehen sind. Durch die inneren Schalen werden die Paneelen beziehungsweise Hohlkammerscheiben nochmals unterteilt, und zwar in der Form, dass mehrere Kammerebenen entstehen. Im Wesentlichen dienen derartige Maßnahmen dazu, die thermische Isolierung zu erhöhen. Im vorliegenden Fall können die verschiedenen Kammerebenen jedoch dazu verwendet werden, die Einlegeteile in den Kammerebenen versetzt zueinander einzuschieben. Somit wird unter Bezugnahme auf die zuvor beschriebenen Ausführungsbeispiele eine Tiefenstruktur ermöglicht, die als annähernd dreidimensional erachtet werden kann. Die Form der Kammern weist hierbei einen quadratischen oder rechteckförmigen Querschnitt auf. Es besteht aber durchaus die Möglichkeit, dass die Kammern zusätzlich durch Diagonalstreben unterteilt werden, wobei in einem solchen Fall die Einlegeelemente entsprechend der vorliegenden Geometrie angepasst werden müssen. Je nach Aufbau der Paneele oder Hohlkammerscheibe besteht somit die Möglichkeit, die Einlegeelemente alternierend in beabstandeten Kammerebenen oder stufenweise versetzt in unterschiedlichen Kammerebenen anzuordnen. In Kombination unterschiedlicher Farben oder Oberflächenstrukturierungen können somit unterschiedliche Muster erzeugt werden, die entweder symmetrisch verlaufen oder auch asymmetrisch ausgebildet sein können.

In einer bevorzugten Ausführungsform sind die verwendeten Einlegeelemente entweder bedruckt oder mit einer bedruckten Folie beschichtet. Derartige Einlegeelemente können zur farblichen Gestaltung von Wand- oder Dachflächen eingesetzt werden, wobei die Möglichkeit besteht, neben der Farbgebung alternativ eine bildhafte Gestaltung auszuwählen. In einer besonderen Ausführungsform können die Einlegeelemente jeweils einen Bildstreifen eines größeren Bildes aufweisen, welche nebeneinanderliegend zu einer großen Bilddarstellung führen. Diese Bilddarstellung kann sich über den größten Teil der Paneele oder der Hohlkammerscheibe in der Höhe und/oder in der Breite erstrecken.

Soweit die Einlegeelemente bedruckt oder gegebenenfalls mit einer bedruckten Folie beschichtet sind, ermöglichen diese eine großformatige Bilddarstellung, die einen vielfältigen Gestaltungsspielraum bietet. Beispielsweise können Tribünen mit Sportdarstellungen, Flughafenhangar mit einer Flugzeugabbildung, Eingangsbereiche von Hotelanlagen mit Landschaften oder Werbeflächen gestaltet werden. Ebenso können Dachflächen auf diese Art und Weise als Werbefläche genutzt werden. Dies eignet sich für Werbemaßnahmen, beispielsweise auf Dachflächen in den Einflugschneisen eines Flughafens oder an größeren Gebäuden, die sich in unmittelbarer Autobahnnähe befinden, sodass die vorbeifahrenden Fahrzeuge werbewirksam auf die Darstellung aufmerksam werden. Darüber hinaus können unansehnliche Gebäude mithilfe der Paneelen oder gegebenenfalls Hohlkammerscheiben verkleidet werden, wobei eine Bilddarstellung einen modernen Charakter vermitteln kann. Soweit mehrere Paneelen mit ihren Kupplungselementen zusammengesetzt zu einer großen Fläche miteinander verbunden werden, besteht somit die Möglichkeit, in annähernd gleicher Größe eine bildhafte Darstellung auf eine Wand- oder Dachfläche vorzusehen. Die Größe des Bildes wird hierbei lediglich von der Größe der Wand- oder Dachfläche begrenzt. Im einfachsten Fall besteht die Möglichkeit, die einzelnen Einlegeelemente zu bedrucken. Alternativ kann eine bedruckte Folie auf die Einlegeelemente aufgeklebt werden, wobei die nebeneinanderliegenden Einlegeelemente jeweils einen Streifen der großformatigen Bilddarstellung aufweisen.

In weiterer besonderer Ausgestaltung des Erfindungsgedankens ist vorgesehen, dass die Einlegeelemente auf der sichtbaren Seite zumindest zwei unter einem Winkel angeordnete Teilflächen aufweisen, welche mit einem nahezu identischen Bildstreifen bedruckt oder beschichtet sind. Die hierbei vorgesehenen Teilflächen bilden einen stumpfen Winkel, sodass ein Betrachter beim Vorbeigehen oder Vorbeifahren auch von der Seite her die bildhafte Darstellung erkennen kann. Hierzu ist es lediglich erforderlich, dass die Einlegeelemente auf der nach außen sichtbaren Seite zwei abgeschrägte Außenflächen aufweisen. Die Bildstreifen einer jeden abgeschrägten Fläche fügen sich ebenfalls zu einer großen Bilddarstellung zusammen, und zwar aus zweierlei Blickrichtung, wobei durch eine gezielte Anpassung des Bildstreifenausschnittes ebenso eine Frontalansicht zu einer deutlich erkennbaren Bilddarstellung führen kann. Die Auflösung der einzelnen Bildstreifen wird hierbei durch die Breite der Einlegeelemente bestimmt, die sich wiederum nach der Breite der einzelnen Kammern der Paneelen oder Hohlkammerscheiben richtet. Bei der Herstellung kann hierbei ausgewählt werden, dass die einzelnen Einlegeelemente aus einem äußerst schmalen Streifen, aber ebenso in besonderen Anwendungsfällen aus einem breiteren Streifen bestehen. Diese streifenförmigen Einlegeelemente können hierbei in einer Kammerebene eingeschoben werden, wobei vorzugsweise die erste Kammerebene verwendet wird, weil die Einlegeelemente damit unmittelbar hinter der ersten äußeren Schale der Paneelen oder Hohlkammerscheiben zu liegen kommen. Soweit eine etwas diffuse Bilddarstellung gewünscht wird, besteht darüber hinaus die Möglichkeit, die Einlegeelemente in einer tiefer liegenden Kammerebene anzuordnen.

Ein weiterer besonderer Vorteil besteht darin, dass die Einlegeelemente jederzeit ausgetauscht werden können und somit ein Wechsel der Werbeflächen beziehungsweise Bilddarstellung ermöglicht wird. Soweit die Verwendung der Paneelen oder Hohlkammerscheiben für bildhafte Darstellungen vorgesehen sind, kann hierbei durch die Breite der einzelnen Kammern und die Anzahl der innenliegenden Schalen eine individuelle Anpassung erfolgen. Bei einer bildhaften Darstellung kann die Notwendigkeit bestehen, die Einlegeelemente möglichst dünnwandig auszuführen, sodass die entsprechenden Kammern für die Einlegeelemente eine verringerte Tiefe aufweisen können. Soweit die Einlegeelemente jedoch großformatig gewählt werden, besteht die Notwendigkeit, auch die Kammergröße an diese entsprechend anzupassen. Für die Bilddarstellung werden hierbei dünne Einlegeelemente eingesetzt, während hingegen für eine nur farbliche Gestaltung entsprechend großformatige Einlegeelemente zum Einsatz kommen können.

Vorzugsweise besteht die Möglichkeit, dass die Einlegeteile rohrförmig gestaltet sind, und zwar in der Art, dass sie aus runden, sternförmigen, dreieckigen, quadratischen oder rechteckförmigen Rohren bestehen. In einer besonderen Ausgestaltung können die Einlegeelemente teilweise rohrförmig ausgebildet sein, wobei ein Teil des Querschnitts der Einlegeelemente als Vollmaterial mit einer beispielsweise abweichenden Einfärbung ausgebildet ist.

Speziell zur Erzielung einer besonderen Lichtstreuung oder Lichtbrechung ist hierbei vorgesehen, dass die Einlegeelemente zumindest teilweise gewölbt oder eben ausgebildet sind und zusätzlich eine Oberflächenstrukturierung aufweisen können. Hierbei besteht beispielsweise die Möglichkeit, dass eine oder zwei Außenflächen eben ausgebildet sind, während zumindest eine Fläche in einer gewölbten Ausführung vorliegt. Somit kann durch Verdrehen der Einlegeelemente ein Muster erzeugt werden. Alternativ besteht die Möglichkeit, dass die Einlegeteile in sich geschlossen sind oder zumindest einseitig, gegebenenfalls auch zweiseitig, aus einem offenen Profil bestehen. Hierbei kann es sich beispielsweise um Winkelprofile mit zwei Schenkeln oder U-Profile handeln. Soweit gewölbte Einlegeteile zum Einsatz kommen, können diese einseitig prismatisch, aber ebenso konkav oder konvex geformt sein und ebenfalls zumindest auf einer Außenfläche farblich abgesetzt oder strukturiert ausgebildet sein.

Hinsichtlich der Farbgebung bestehen verschiedene Möglichkeiten, beispielsweise kann auf der Oberfläche einer Seite der Einlegeteile eine Farbschicht aufgetragen sein oder es kann diese Oberfläche vollständig durchgefärbt sein, beispielsweise wenn die Einlegeteile selbst extrudiert werden und zwei unterschiedliche Farbmaterialien aus Kunststoff eingesetzt werden. Vorzugsweise besteht hierbei die Möglichkeit, dass ein Einlegeelement auf jeder Oberfläche eine andere Farbgebung aufweist, sodass, sofern es sich um dreieckförmige, rechteckförmige oder quadratische Einlegeelemente handelt, durch Verdrehen der Einlegeelemente eine andere Farbgebung erzielt werden kann, die im Einzelfall auch nachträglich veränderbar ist. Die verwendete Farbschicht kann hierbei fluoreszierend, lumineszierend oder phosphoreszierend ausgebildet sein. Gleiches gilt für die Verwendung von strukturierten Einlegeelementen. Auch diese können auf jeder Oberfläche eine andere Strukturierung aufweisen. Hierbei besteht unter anderem auch die Möglichkeit, dass unabhängig einer vorgegebenen Breite der Paneelen oder Hohlkammerscheiben die Länge der Einlegeelemente variiert wird, sodass einige Einlegeelemente sich über die gesamte Breite der Paneele beziehungsweise Hohlkammerscheibe erstrecken, andere hingegen in einer verkürzten Form eingesetzt werden, sodass sogar innerhalb einer Paneelen- beziehungsweise Hohlkammerscheibenbreite zusätzliche Gestaltungsmöglichkeiten bestehen.

Aufgrund der unterschiedlichen Gestaltung der Einlegeelemente durch Farbgebung und gegebenenfalls strukturierten Oberfläche besteht daher eine Vielzahl von Möglichkeiten der Gestaltung, wobei die Variationsmöglichkeiten durch die Farbgebung und Oberflächengestaltung abschließend kaum aufzuzählen sind.

In einer besonderen Ausgestaltung können die Einlegeelemente endseitig verschlossen sein und somit aus einer gasdichten Ausführung bestehen, welche mit einem Gas oder einer Flüssigkeit gefüllt sind. Unter Einfluss der Infrarot- oder UV-Strahlung können hierzu unterschiedliche Reaktionen ausgelöst werden, die zum Beispiel zu einer Eintrübung oder Einfärbung der verwendeten Gase beziehungsweise Flüssigkeiten führen und damit die optische Gestaltung beeinflussen.

In besonderer Ausgestaltung der Erfindung ist vorgesehen, dass die Einlegeelemente mit einzelnen LED's oder LED-Streifen auf zumindest einer Außenfläche oder im Inneren der Einlegeelemente bestückt sind. Durch die LED's besteht hierbei die Möglichkeit zusätzliche Beleuchtungseffekte beispielsweise im Randbereich einzubringen, um eine Fassade zu gestalten.

Die Kunststoffmaterialien der Einlegeelemente können ferner mit Additiven angereichert sein, sodass diese lumineszierend, fluoreszierend oder phosphoreszierend ausgebildet sein können.

Vorzugsweise ist vorgesehen, dass für die Einlegeelemente ein Kunststoff, beispielsweise Polycarbonat, Polyester oder PMMA als transparentes Material oder PE, PP, PVC oder Polystyrol als halbtransparentes oder undurchlässiges Material verwendet wird. Es besteht jedoch ohne Weiteres die Möglichkeit, auch andere Kunststoffmaterialien, wie beispielsweise PET oder recycelte Kunststoffmaterialien einzusetzen. Die Verwendung der Einlegeelemente wird bevorzugt bei Paneelen oder Hohlkammerscheiben vorgenommen, die eine transparente Ausführung aufweisen, jedoch besteht durchaus die Möglichkeit, dass leichte farbliche Einfärbungen vorliegen, sodass die Einlegeteile nach außen trotzdem deutlich sichtbar sind.

Die besonderen Vorteile der vorliegenden Erfindung bestehen in der Möglichkeit, eine großformatige Bilddarstellung auf der Wand- oder Dachfläche eines Gebäudes anzuordnen. Das darzustellende Bild wird hierbei in schmale Bildstreifen unterteilt, die entweder auf den Einlegeelementen aufgedruckt oder auf eine Folie aufgesteckt werden und auf die Einlegeelemente aufgeklebt werden. Aus den vielen einzelnen Einlegeelementen setzt sich somit streifenförmig ein großformatiges Bild zusammen, welches aufgrund des vorliegenden UV-Schutzes der verwendeten Paneelen und Hohlkammerscheiben und der vorhandenen Außenschale vor Witterungseinflüssen geschützt ist. Durch die Austauschmöglichkeit der Einlegeelemente in Form von schmalen Streifen besteht darüber hinaus der wesentliche Vorteil, dass die Bilddarstellung jederzeit angepasst werden kann, um somit aktuelle Werbung oder den Jahreszeiten entsprechende äußere Gestaltungen des Gebäudes vorzusehen.

Die weiteren Vorteile der vorliegenden Erfindung bestehen darin, dass durch unterschiedliche Maßnahmen Wand- und Dachflächen einen besonderen optischen Eindruck erhalten, und zwar dadurch, dass Einlegeteile verwendet werden, welche unterschiedliche Profilstrukturen im Querschnitt aufweisen und darüber hinaus auf zumindest einer Außenfläche farblich oder gegebenenfalls strukturell gestaltet sein können. Vorzugsweise werden sämtliche Außenflächen der Einlegeelemente entsprechend farblich gestaltet oder strukturiert, sodass durch Verdrehen der Einlegeelemente eine nachträgliche Veränderung erfolgen kann.

Gerade im Dachbereich lässt sich durch die unterschiedlichen Formen, Farben und Materialien eine Sommer- und Wintervariante des Daches bei einer Querverlegung der Paneele konzipieren, sodass die Einlegeelemente als Sonnenschutz im Sommer und im Winter vor Eis und Schnee schützen. Die Form und Farbe wird dabei an die Notwendigkeiten angepasst. Durch die Anordnung der Einlegeelemente innerhalb der Kammern und verschiedenen Kammerebenen, beispielsweise mit kleineren oder größeren Abständen, können somit streifenförmige Strukturen erzeugt werden, die auch weit hin sichtbar sind und den optischen Eindruck eines Gebäudes nachhaltig verbessern. Insbesondere bei unansehnlich gewordenen Fabrikgebäuden oder großen Gebäuden kann durch die erzielbare optische Ausgestaltung ein positiver Gesamteindruck erreicht werden. Aufgrund der Vielzahl von unterschiedlichen Farbgebungen und Strukturierungen sind den Gestaltungsmöglichkeiten hierbei keine Grenzen gesetzt. Durch den Einsatz unterschiedlicher Längen der Einlegeelemente besteht darüber hinaus der Vorteil, auch weitere Gestaltungen einfließen zu lassen, die sich zu einem Gesamtbild zusammensetzen, so lassen sich beispielsweise Schrifttzüge durch die Positionierung und unterschiedlichen Farben und Längen der Einlegeelemente erreichen. In besonderer Ausgestaltung besteht auch die Möglichkeit, durch den Einsatz von gasdichten Einlegeelementen, welche wiederum mit einem Gas oder mit einer Flüssigkeit gefüllt sind, besondere optische Effekte zu erzielen. Die hierbei verwendeten Einlegeelemente können jederzeit durch andere ausgetauscht werden oder gegebenenfalls durch Drehen der Einlegeelemente zur Erzeugung eines neuen Musters verwendet werden.

Die Erfindung wird im Nachfolgenden anhand der Figuren nochmals erläutert.

Es zeigt
- Fig. 1: in einer perspektivischen Ansicht eine herkömmliche Paneele mit randseitigen Verbindungselementen,
- Fig. 2: in einer perspektivischen Ansicht die aus Figur 1 bekannte Paneele mit eingeschobenen rechteckförmigen Einlegeelementen,
- Fig. 3: in einer perspektivischen Ansicht die aus Figur 1 bekannte Paneele mit eingeschobenen dreieckförmigen Einlegeelementen,
- Fig. 4: in einer perspektivischen Ansicht eine typische Paneele mit einliegenden Einlegeelementen in unterschiedlicher Gestaltung,
- Fig. 5: in einer perspektivischen Ansicht eine typische Paneele mit einliegenden Einlegeelementen, wobei diese teilweise mit LED's ausgestattet sind,
- Fig. 6: in einer perspektivischen Ansicht eine typische Paneele mit alternativ geformten einliegenden Einlegeelementen,
- Fig. 7: in einer perspektivischen Ansicht eine typische Paneele mit weiteren alternativen Ausführungsformen der einliegenden Einlegeelement,
- Fig. 8: in einer Ansicht eine Paneelstruktur, die unter Verwendung von bedruckten Einlegeelementen zu einer Bilddarstellung führt,
- Fig. 9: in einer perspektivischen Ansicht die aus Figur 8 bekannte Paneele mit Bilddarstellung,
- Fig. 10: in einer weiteren perspektivischen Ansicht die aus Figur 8 bekannte Paneele mit Bilddarstellung und
- Fig. 11: in einer dritten perspektivischen Ansicht die Struktur der Paneele mit Bilddarstellung.

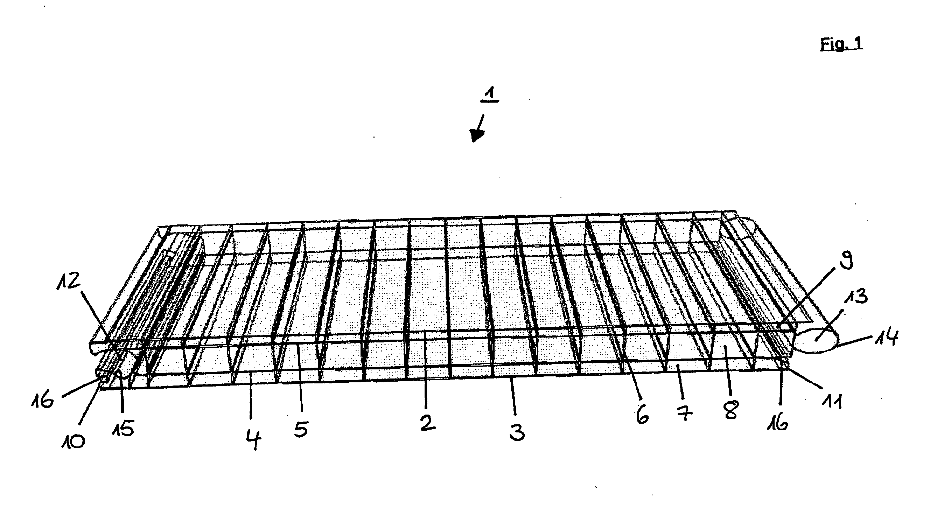

Figur 1 zeigt eine Paneele 1, die eine wabenartige Struktur aufweist. Die Struktur wird hierbei durch die horizontale Anordnung der äußeren Schalen 2, 3 hervorgerufen, die zwei mittlere Schalen 4, 5 einrahmen. Sämtliche Schalen 2, 3, 4, 5 sind durch in regelmäßigen Abständen angeordnete Querstege 6 miteinander verbunden. Die Anzahl der inneren Schalen 4, 5 kann je nach Ausführungsbeispiel variiert werden, wobei bevorzugt unter Berücksichtigung einer möglichst hohen thermischen Isolierung eine entsprechende Anzahl von inneren Schalen 4, 5 verwendet wird. Aufgrund der geometrischen Struktur der Paneele 1 entstehen aufgrund der Schalen 2, 3, 4, 5 und Querstege 6 einzelne Kammern 7, 8, 9, die jeweils in einer Ebene angeordnet sind. Die Querschnittsgröße der einzelnen Kammern 7, 8, 9 ist im Ausführungsbeispiel unterschiedlich, kann jedoch ohne Weiteres identisch ausgebildet sein. Entlang der Längskanten 10, 11 der Paneele 1 befinden sich Kupplungselemente 12, 13, die zur Verbindung mehrerer Paneelen 1 untereinander aus einer zapfenförmigen, bauchigen Ausformung 14 des Kupplungselementes 13 bestehen, die einstückig angeformt ist. Demgegenüber besteht das Kupplungselement 12 aus einer bauchigen Vertiefung 15, sodass die beiden Kupplungselemente korrespondierend ineinander geschoben beziehungsweise gedrückt werden können. Zur Befestigung der Paneele kann hierbei eine Nut 16, 17 vorgesehen werden, die an den jeweiligen Längskanten 10, 11 ausgebildet ist. Nach dem Zusammenschieben zweier Paneelen 1 entsteht somit eine T-förmige Nut, in die beispielsweise ein Befestigungselement eingesetzt werden kann. Das Befestigungselement wird hierbei unmittelbar mit dem Dachsparren oder einer Wandverkleidung verschraubt und bietet einen sicheren Halt.

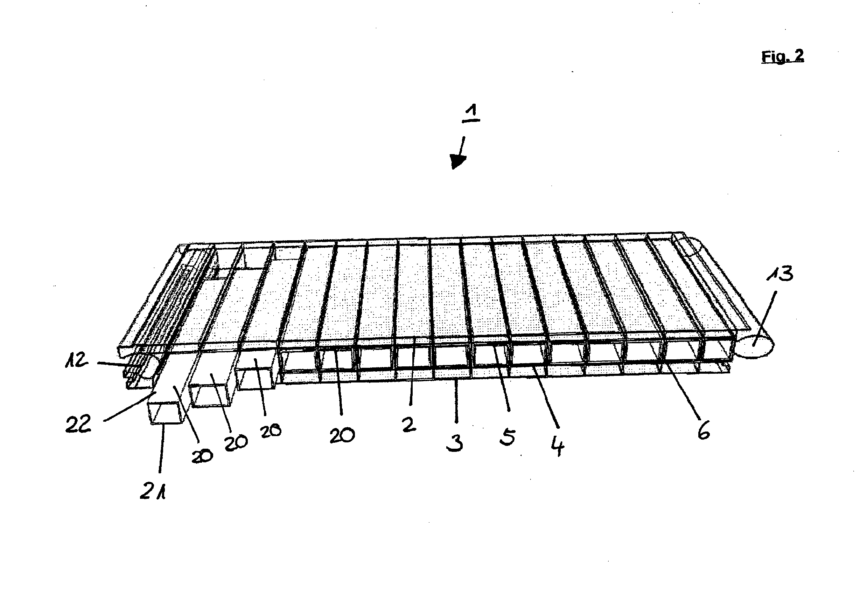

Figur 2 zeigt in einer perspektivischen Ansicht die aus Figur 1 bekannte Paneele 1, bei der in die mittlere Kammerebene rechteckförmige Einlegeelemente 20 zum Teil vollständig und zum Teil teilweise eingeschoben sind. Hierbei handelt es sich um Einlegeelemente 20, welche sowohl farblich als auch hinsichtlich ihrer Oberflächenstruktur unterschiedlich gestaltet sein können. Bei dem gezeigten Ausführungsbeispiel stehen hierbei zwei Außenflächen 21, 22 zur Verfügung, die eine entsprechende farbliche oder strukturelle Gestaltung aufweisen können. Somit besteht die Möglichkeit, die Einlegeelemente 20 um 180 Grad zu verdrehen, um eine andere Optik zu erhalten. Hierbei besteht im Weiteren ohne Weiteres die Möglichkeit, dass einzelne Einlegeelemente unterschiedliche Farben aufweisen, sodass ein Farbmuster auf diese Weise erzielt werden kann. Im Ausführungsbeispiel besitzen die Einlegeelemente eine Länge, die der Breite der Paneele 1 entspricht. Ebenso besteht die Möglichkeit, dass die Länge der Einlegeelemente variiert wird. Soweit die Einlegeelemente 20 in verkürzten Formen eingesetzt werden, entsteht beispielsweise nicht nur ein streifenförmiges Muster, sondern auch die Möglichkeit, ein Muster zur Längsmittelebene auszubilden.

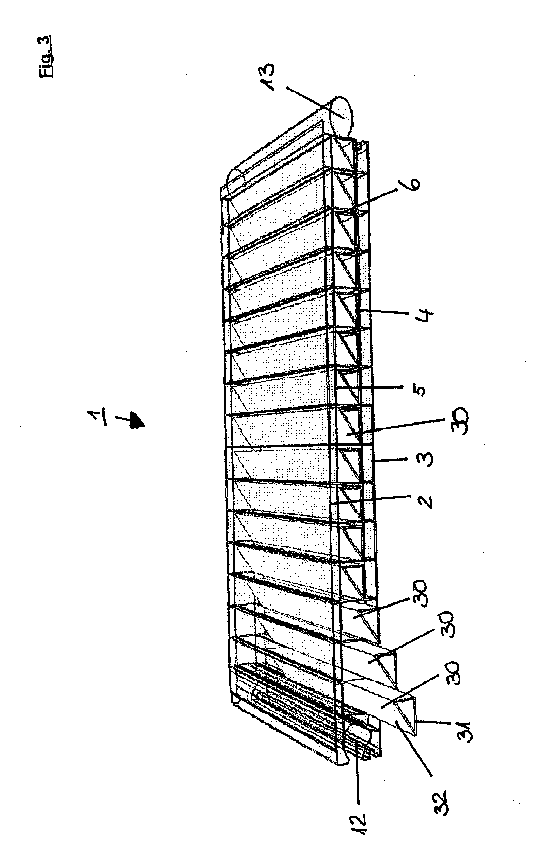

Figur 3 zeigt in einer perspektivischen Ansicht wiederum die aus Figur 1 bekannte Paneele 1, bei der dreieckförmige Einlegeelemente 30 zum Teil vollständig, zum Teil nur teilweise eingeschoben sind. Ebenso wie bei dem Ausführungsbeispiel gemäß Figur 2 können die Einlegeelemente 30 unterschiedlich farblich gestaltet sein oder eine Oberflächenstruktur auf der unteren Fläche 31 beziehungsweise schräg verlaufenden Fläche 32 aufweisen. Diese Einlegeelemente 30 eignen sich beispielsweise hervorragend zur Beschattung, wenn die schräg verlaufende Fläche 32 farblich entweder eingefärbt oder durchgefärbt ist, wobei vorzugsweise in diesem Fall nur jede zweite, dritte oder vierte Kammer mit einem Einlegeelement 30 bestückt wird. Somit liegen streifenweise einzelne Kammern mit Einlegeelementen 30 und damit einer möglichen Beschattung sowie teilweise einzelne Kammern ohne Einlegeteile vor, sodass das Licht ungehindert in die darunter befindlichen Räume, beispielsweise bei einer Dacheindeckung gelangen kann.

Soweit in den Figuren 1 bis 3 lediglich eine Paneele 1 gezeigt wurde, ist die Verwendung der Einlegeelemente 20 oder 30 auch bei Hohlkammerscheiben denkbar, die randseitig keine Kupplungselemente aufweisen. Die Ausbildung der einzelnen Kammern beziehungsweise Kammerebenen erfolgt analog, wie bei der Paneele 1, lediglich die Art der Befestigung der Hohlkammerscheiben weicht ab, und zwar wird hierzu vorzugsweise ein Rahmenprofil aus Aluminium verwendet, um die einzelnen Hohlkammerscheiben aufzunehmen und sicher zu halten.

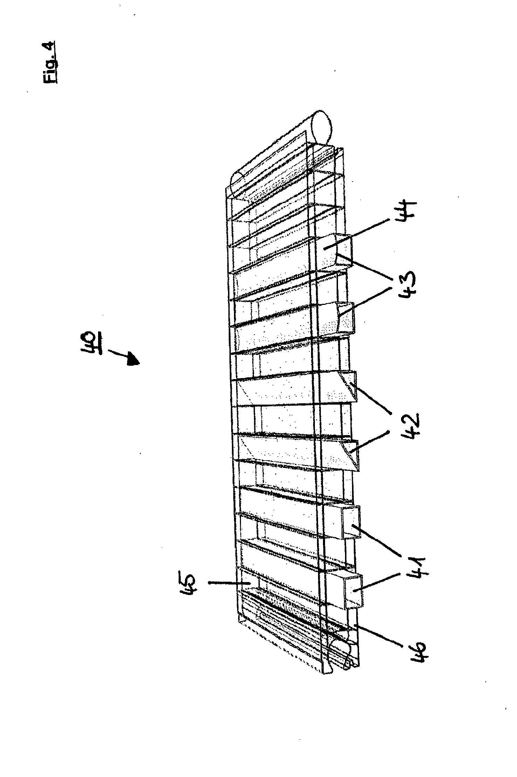

Figur 4 zeigt eine Paneele 40 wie sie bereits aus den Figuren 1 bis 3 bekannt ist, sodass auf diese nicht nochmals gesondert eingegangen zu werden braucht. Bei diesem Ausführungsbeispiel sind in der Paneele 40 Einlegeelemente 41, 42 und 43 eingefügt. Die Einlegeelemente 41 bestehen aus rechteckförmigen Hohlprofilen, während die Einlegeelemente 42 aus dreieckförmigen Hohlprofilen bestehen und die Einlegeelemente 43 aus rechteckförmigen Hohlprofilen, deren nach außen gerichtete Fläche 44 konvex geformt ist. Mithilfe dieser Einlegeelemente 41, 42, 43 kann in entsprechender Anordnung eine Gestaltung, beispielsweise einer Wandfläche aus Paneelen 40 erfolgen, wobei eine Kombination der einzelnen Einlegeelemente 41, 42, 43 gewählt werden kann oder gegebenenfalls eine Vielzahl gleicher Einlegeelemente 41, 42, 43 verwendet wird. Hinsichtlich der verwendeten Materialien der Einlegeelemente 41, 42, 43 sowie deren Oberflächenstrukturen und Farbgebung besteht darüber hinaus die Möglichkeit eine unterschiedliche Gestaltung vorzunehmen. Die Farbgebung der Paneele 40 mit ihrer außenliegenden Schale 45 und innenliegenden Schale 46 kann beispielsweise identisch oder abweichend zu den Oberflächen der Einlegeelemente 41, 42, 43 ausgebildet sein. Darüber hinaus besteht die Möglichkeit, dass die Einlegeelemente 41, 42, 43 nicht nur im Material unterschiedlich sind, sondern darüber hinaus die verwendeten Farben lumineszierend, fluoreszierend oder phosphoreszierend ausgebildet sind. Somit besteht die Möglichkeit eine individuelle Gestaltung der Außenfläche vorzunehmen, wobei die Einlegeelemente 41, 42, 43 untereinander variabel in der Farbe, dem Material und in der Oberflächenbeschaffenheit ausgebildet sein können und im Einzelfall jede einzelne außen sichtbare Fläche unterschiedlich sein kann. Vorzugsweise können die äußeren Schalen 45, 46 der Paneele 40 hierbei glasklar aber ebenso leicht eingefärbt ausgeführt werden. Darüber hinaus besteht die Möglichkeit, dass die rückseitigen Flächen der Einlegeelemente 41, 42, 43 im Bedarfsfall eine abweichende Farbe aufweisen, insbesondere eine dunkle bis schwarze Farbtönung, je nach dem welcher Zweck mit den Einlegeelementen 41, 42, 43 verfolgt wird.

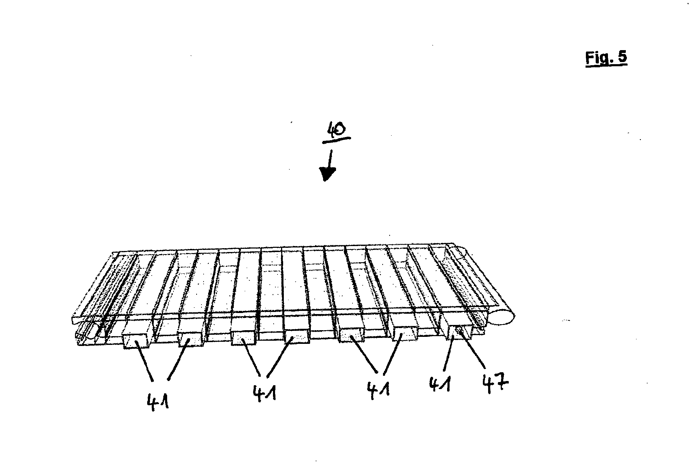

Figur 5 zeigt die aus Figur 4 bekannte Paneele 40, wobei in diesem Fall nur Einlegeelemente 41 in die Kammern der Paneele 40 eingeschoben sind. Ein letztes Einlegeelemente 41 ist zudem mit einer LED-Lichtleiste 47 bestückt, sodass zusätzlich zu der farblichen und Oberflächenstrukturierung auch Lichteffekte bei der Planung einer Wandfläche mit integriert werden können. Die Variationsmöglichkeiten der Einlegeelemente 41 bleibt hierbei bestehen, sodass diese auch farblich und hinsichtlich ihrer Oberflächenbeschaffenheit in unterschiedlicher Kombination verwendet werden können.

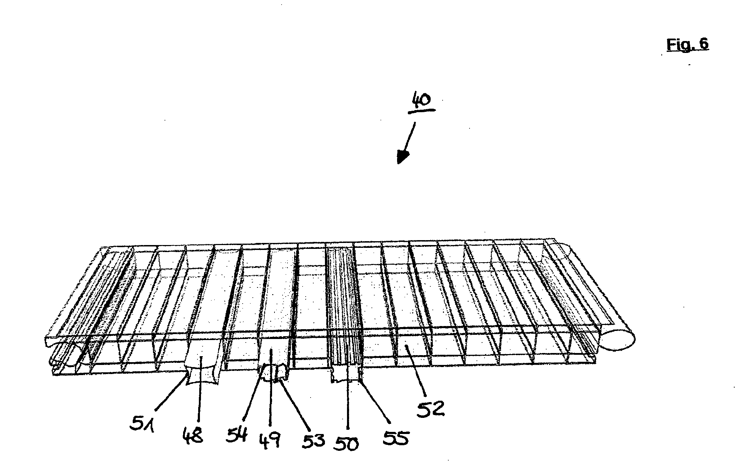

Figur 6 zeigt die aus Figur 4 bekannte Paneele 40 mit Einlegeelementen 48, 49, 50. Das Einlegeelemente 48 weist vier konvex geformte Außenflächen 51 auf, sodass in den Eckbereichen die Seitenflächen spitz zueinander zulaufen. Bei einer geringen Übergröße des Einlegeelementes 48 gegenüber den Kammern 52 der Paneele 40 besteht somit die Möglichkeit das Einlegeelemente 48 einklemmend in die Paneele 40 beziehungsweise deren Kammer 52 einzuschieben. Das Einlegeelemente 49 besitzt demgegenüber auf den nach außen liegenden Oberflächen 53, 54 eine unregelmäßige Struktur, welche durch entsprechende Farbgebung der Oberflächen beziehungsweise Materialauswahl oder Oberflächenbeschaffenheit zusätzlich variiert werden kann. Das Einlegeelemente 50 besitzt auf sämtlichen Außenflächen 55 eine stegförmige Struktur, sodass das Einlegeelemente 50 ebenfalls in die Kammern 52 eingepresst werden kann, darüber hinaus für besondere Anwendungszwecke mit einer vergrößerten Oberflächenstruktur ausgestattet ist, um beispielsweise eine möglichst große Oberfläche zu schaffen, die zu einer schnelleren Erwärmung der Einlegeelemente und einem möglicherweise in den Einlegeelementen 50 befindliches Medium in Form von Gasen oder Flüssigkeiten, um diese zur Energiegewinnung zu verwenden.

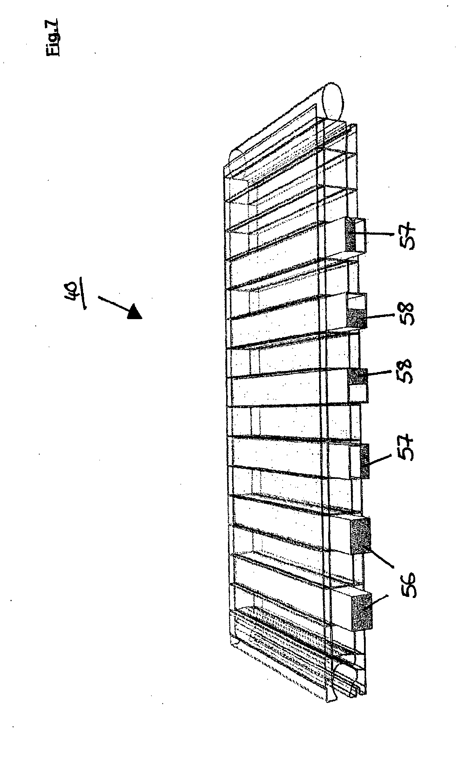

Figur 7 zeigt die aus Figur 4 bekannte Paneele 40, wobei in diesem Fall die Einlegeelemente 56, 57, 58 im Falle der Einlegeelemente 56 aus Vollmaterial bestehen, während demgegenüber die Einlegeelemente 57 hälftig aus Vollmaterial und hälftig aus einem Profil bestehen und die Einlegeelemente 57 wahlweise mit dem Hohlprofil nach oben oder unten gegenüber der Außenfläche der Paneele 40 ausgerichtet sind. Die Einlegeelemente 58 sind demgegenüber in Querrichtung unterteilt, und zwar ebenfalls teilweise als Vollmaterial und teilweise als Hohlprofil. Auch hier besteht die Möglichkeit die Einlegeelemente 58 insoweit auszurichten, dass das Vollmaterial in wechselnden Richtungen angeordnet sein kann. Hinzu kommt, dass die Einlegeelemente 56, 57, 58 zusätzlich hinsichtlich ihrer Farbe, ihren Materialeigenschaften und ihrer Oberflächenbeschaffenheit unterschiedlich ausgestaltet sein können. Insgesamt gesehen zeigen die Figuren 4 bis 7 die Verwendung der unterschiedlichsten Einlegeelemente auf, die entweder miteinander kombiniert oder gegebenenfalls nur in einer Ausführungsform zum Einsatz kommen können.

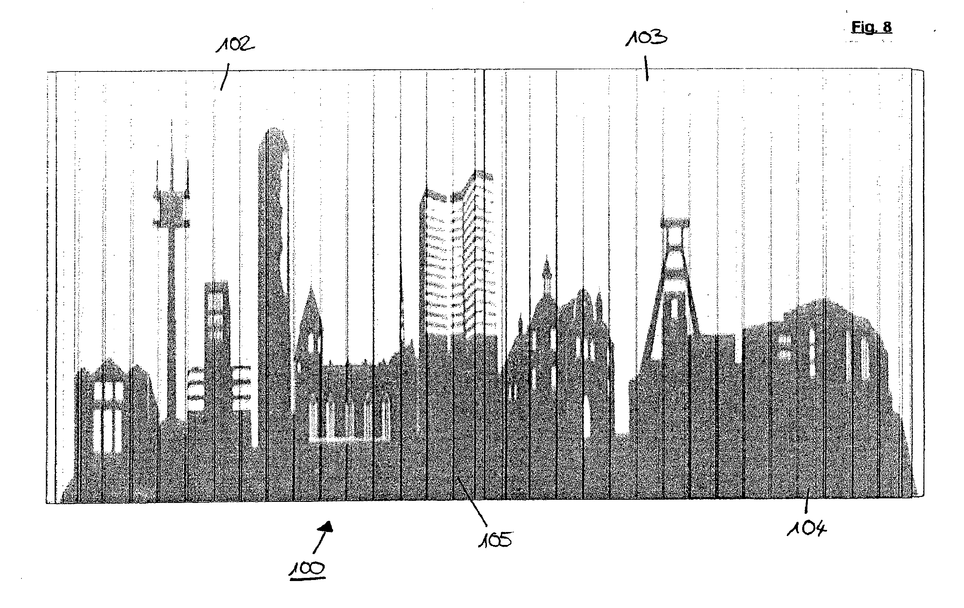

Figur 8 zeigt in einer Frontansicht eine Paneelwand 100, die aus einzelnen Paneelen 102, 103 besteht. Einlegeelemente in Form von schmalen Streifen 104 zeigen das Beispiel einer Stadtansicht 105. Das gewählte Motiv ist nur als beispielhaft anzusehen und kann jederzeit durch andere Darstellungen, beispielsweise Autos, Flugzeuge, Landschaften oder Sportereignisse ersetzt werden.

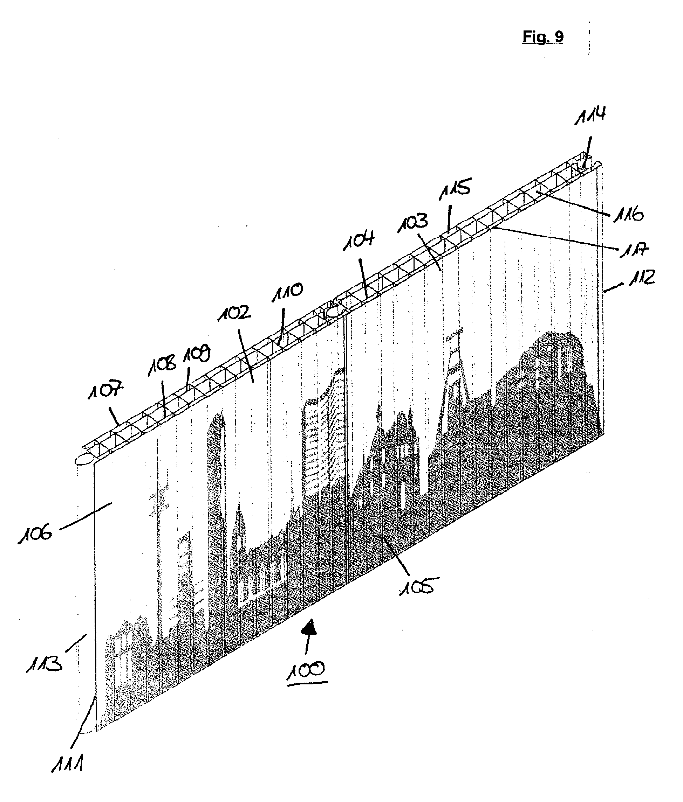

Figur 9 zeigt in einer perspektivischen Ansicht die Paneelwand 100, bestehend aus den beiden einzelnen Paneelen 102, 103, wobei aus dieser Ansicht die Paneelstruktur deutlich wird. Es handelt sich um Einzelpaneelen 102, 103 die jeweils aus zwei äußeren Schalen 106, 107 und zwei inneren Schalen 108, 109 bestehen. Die einzelnen Schalen 106, 107, 108, 109 sind durch Querstege 110 miteinander verbunden. An den Längskanten 111, 112 sind Kupplungselemente 113 und 114 angeformt. Die Kupplungselemente 113 bestehen aus einem wulstartigen einstückig angeformten Teil der Paneelen 102, 103, während die Kupplungselemente 114 aus einer bauchförmigen Ausnehmung bestehen, sodass das erste Kupplungselement 113 passgenau in das zweite Kupplungselement 114 eingreifen kann.

Durch die vorhandenen äußeren Schalen 106, 107 und inneren Schalen 108, 109 sind bei diesen Paneelen 102, 103 insgesamt drei Kammerebenen 115, 116, 117 ausgebildet. In der Kammerebene 117 sind Einlegelemente 104 in Form von schmalen Streifen eingefügt, die zu einer Bilddarstellung 105 führen. Jedes der schmalen Einlegeelemente 104 weist insofern einen schmalen Streifen der Bilddarstellung 105 auf, die sich in der korrekten Reihenfolge zur Bilddarstellung ergänzen.

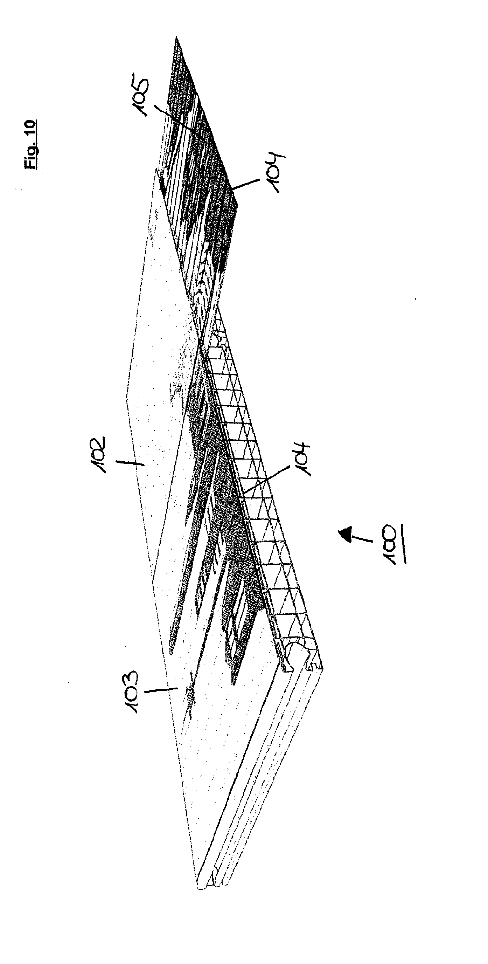

Figur 10 zeigt in einer weiteren perspektivischen Ansicht die Paneelwand 100, bestehend aus den beiden Paneelen 102, 103, während in der Paneele 103 die schmalen Einlegeelemente 104 bereits eingeschoben sind, sind in der Paneele 102 die schmalen Einlegeelemente 104 zur zum Teil eingeschoben und es wird erkennbar, dass sich die Bilddarstellung 105 auf den schmalen Einlegeelementen 104 befindet. Die Einlegeelemente können hierbei beispielsweise mit der Bilddarstellung 105 bedruckt werden, alternativ besteht die Möglichkeit, dass eine bedruckte Folie auf die Einlegeelemente 104 aufgeklebt wird.

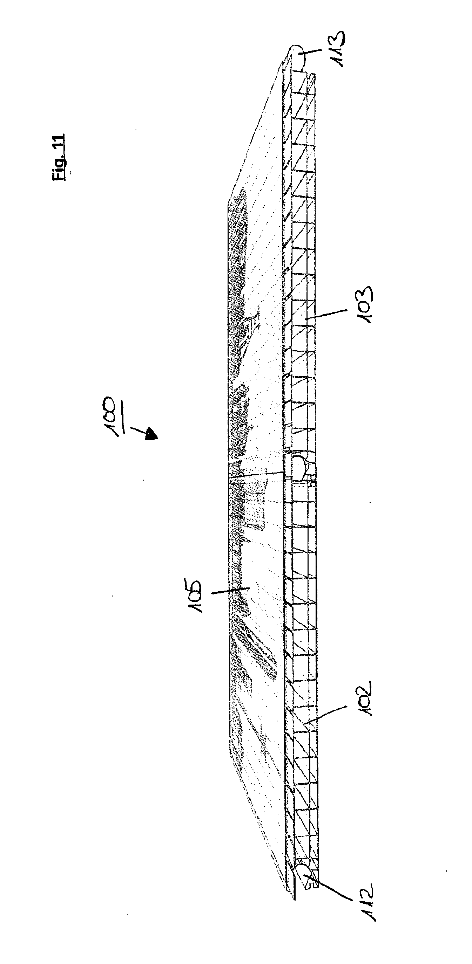

Figur 11 zeigt in einer weiteren perspektivischen Ansicht die Paneelwand 100 mit der Bilddarstellung 105, wobei aus dieser Ansicht nochmals deutlich wird, dass die Paneelwand 100 aus einer Paneele 102, 103 besteht. Mithilfe der Kupplungselemente 113 beziehungsweise 112 erfolgt eine Verbindung der einzelnen Paneelen 102, 103 untereinander.

### Bezugszeichenliste:

| | |
|---|---|
| 1 | Paneele |
| 2 | Schale |
| 3 | Schale |
| 4 | Schale |
| 5 | Schale |
| 6 | Quersteg |
| 7 | Kammer |
| 8 | Kammer |
| 9 | Kammer |
| 10 | Längskante |
| 11 | Längskante |
| 12 | Kupplungselement |
| 13 | Kupplungselement |
| 14 | Ausformung |
| 15 | Vertiefung |
| 16 | Nut |
| 17 | Nut |
| 20 | Einlegeelement |
| 21 | Außenfläche |
| 22 | Außenfläche |
| 30 | Einlegeelement |
| 31 | Fläche |
| 32 | Fläche |
| 40 | Paneele |
| 41 | Einlegeelement |
| 42 | Einlegeelement |
| 43 | Einlegeelement |
| 44 | Fläche |
| 45 | Schale |
| 46 | Schale |

| | |
|---|---|
| 47 | LED-Lichtleiste |
| 48 | Einlegeelement |
| 49 | Einlegeelement |
| 50 | Einlegeelement |
| 51 | Außenfläche |
| 52 | Kammer |
| 53 | Oberfläche |
| 54 | Oberfläche |
| 55 | Außenfläche |
| 56 | Einlegeelement |
| 57 | Einlegeelement |
| 58 | Einlegeelement |
| 100 | Paneelwand |
| 102 | Paneele |
| 103 | Paneele |
| 104 | Streifen |
| 105 | Stadtansicht |
| 106 | Schale |
| 107 | Schale |
| 108 | Schale |
| 109 | Schale |
| 110 | Quersteg |
| 111 | Längskante |
| 112 | Längskante |
| 113 | Kupplungselement |
| 114 | Kupplungselement |
| 115 | Kammerebene |
| 116 | Kammerebene |
| 117 | Kammerebene |

## Patentansprüche

1. Paneele (1, 102, 103) oder Hohlkammerscheibe für Wand- und/oder Dachflächen, umfassend zumindest zwei äußere Schalen (2, 3, 106, 107) und mehrere Querstege (6, 110), welche die Schalen (2, 3, 106, 107) miteinander verbinden, sodass eine Vielzahl von einzelnen Kammern (7, 8, 9) zwischen den äußeren Schalen (2, 3, 106, 107) vorliegen,
**dadurch gekennzeichnet,**
**dass** zumindest einige Kammern (7, 8, 9) mit Einlegeelementen (20, 30) bestückt sind, welche zumindest auf den den äußeren Schalen (2, 3, 106, 107) zugewandten Flächen (31, 32) eine farbliche und/oder strukturierte Gestaltung aufweisen.

2. Paneele (1, 102, 103) oder Hohlkammerscheibe nach Anspruch 1,
**dadurch gekennzeichnet,**
**dass** zumindest eine, vorzugsweise mehrere innere Schalen (4, 5, 108, 109) vorgesehen sind, sodass mehrere Kammerebenen (115, 116, 117) entstehen, und/oder dass die Kammern (7, 8, 9) einen quadratischen oder rechteckförmigen Querschnitt aufweisen.

3. Paneele (1, 102, 103) oder Hohlkammerscheibe nach Anspruch 1 oder 2,
**dadurch gekennzeichnet,**
**dass** die Einlegeelemente (56, 57, 58) bedruckt oder mit einer bedruckten Folie beschichtet sind.

4. Paneele (1, 102, 103) oder Hohlkammerscheibe nach einem der Ansprüche 1 bis 3,
**dadurch gekennzeichnet,**
**dass** die Einlegeelemente (56, 57, 58) jeweils einen Bildstreifen eines größeren Bildes aufweisen, welche nebeneinanderliegend zu einer großen Bilddarstellung führen, und/oder dass sich die Bilddarstellung über den größten Teil der Paneele oder der Hohlkammerscheibe in der Höhe und/oder in der Breite erstreckt.

5. Paneele (1, 102, 103) oder Hohlkammerscheibe nach einem der Ansprüche 1 bis 4,
**dadurch gekennzeichnet,**
**dass** die Einlegeelemente (56, 57, 58) auf der sichtbaren Seite zumindest zwei unter einem Winkel angeordnete Teilflächen aufweisen, welche mit einem nahezu identischen Bildstreifen bedruckt oder beschichtet sind.

6. Paneele (1, 102, 103) oder Hohlkammerscheibe nach einem der Ansprüche 1 bis 5,
**dadurch gekennzeichnet,**
**dass** die Einlegeelemente (56, 57, 58) aus schmalen Streifen bestehen, welche an die Breite der einzelnen Kammern angepasst sind, und/oder dass die Einlegelemente (20, 30) aus runden, sternförmigen, dreieckigen, quadratischen oder rechteckförmigen Rohren, vorzugsweise aus Kunststoff, bestehen, und/oder dass die Einlegeelemente (56, 57, 58) zumindest vollständig oder teilweise rohrförmig ausgebildet sind.

7. Paneele (1, 102, 103) oder Hohlkammerscheibe nach einem der Ansprüche 1 bis 6,
**dadurch gekennzeichnet,**
**dass** die Folie fluoreszierend, lumineszierend oder phosporizierend ausgebildet ist.

8. Paneele (1, 102, 103) oder Hohlkammerscheibe nach einem der Ansprüche 1 bis 7,
**dadurch gekennzeichnet,**
**dass** die Einlegeelemente (20, 30) alternierend in beabstandeten Kammerebenen angeordnet sind, und/oder dass die Einlegeelemente (20, 30) stufenweise versetzt in unterschiedlichen Kammerebenen angeordnet sind, und/oder dass die Einlegeelemente (56, 57, 58) in einer vorderen, mittleren oder rückwärtigen Kammerebene angeordnet sind.

9. Paneele (1, 102, 103) oder Hohlkammerscheibe nach einem der Ansprüche 1 bis 8,
**dadurch gekennzeichnet,**
**dass** die Einlegeelemente (20, 30) gewölbt oder eben ausgebildet sind, und/oder dass die Einlegeelemente (20, 30) zumindest einseitig prismatisch, konkav oder konvex geformt sind.

10. Paneele (1, 102, 103) oder Hohlkammerscheibe nach einem der Ansprüche 1 bis 9,
**dadurch gekennzeichnet,**
**dass** die Einlegeelemente (20, 30) in sich geschlossenen sind oder zumindest einseitig, gegebenenfalls auch zweiseitig, aus einem offenen Profil bestehen.

11. Paneele (1, 102, 103) oder Hohlkammerscheibe nach einem der Ansprüche 1 bis 10,
**dadurch gekennzeichnet,**
**dass** die Einlegeelemente (20, 30) zumindest auf einer Oberfläche eine Farbschicht aufweisen oder vollständig durchgefärbt sind, und/oder dass die Oberflächen der Einlegeelemente (20, 30) in der Art ausgebildet sind, dass jede Oberfläche einen anderen Farbton aufweist und/oder dass die Oberfläche der Einlegeelemente (20, 30) in derart strukturiert ist, dass jede Oberfläche eine andere Strukturierung aufweist.

12. Paneele (1, 102, 103) oder Hohlkammerscheibe nach einem der Ansprüche 1 bis 11,
**dadurch gekennzeichnet,**
**dass** die Einlegeelemente (20, 30) mit einem Gas oder einer Flüssigkeit gefüllt sind.

13. Paneele (1, 102, 103) oder Hohlkammerscheibe nach einem der Ansprüche 1 bis 12,
**dadurch gekennzeichnet,**
**dass** die Einlegeelemente (20, 30) mit einzelnen LED's oder LED-Streifen auf zumindest einer Außenfläche oder im Inneren der Einlegeelemente bestückt sind.

14. Paneele (1, 102, 103) oder Hohlkammerscheibe nach einem der Ansprüche 1 bis 13,
**dadurch gekennzeichnet,**
**dass** die Einlegeelemente (20, 30) aus Kunststoff, beispielsweise Polycarbonat, Polystyrol, Polyester, PMMA, PE, PP, PVC oder recycelten Kunststoffmaterialien bestehen.

15. Paneele (1, 102, 103) oder Hohlkammerscheibe nach einem der Ansprüche 1 bis 14,
**dadurch gekennzeichnet,**
**dass** die Paneelen (1, 102, 103) oder Hohlkammerscheiben zumindest teilweise transparent ausgeführt sind.
